# DEMANDE DE BREVET EUROPEEN

(11) **EP 3 232 365 A1**
(43) Date de publication de la demande: **18.10.2017**
(21) Numéro de dépôt: 17165455.1
(22) Date de dépôt: 07.04.2017
(51) Int. Cl.: G06F 21/64, G06F 21/56

(54) **PROCÉDÉ DE VÉRIFICATION AUTOMATIQUE D'UN FICHIER INFORMATIQUE CIBLE PAR RAPPORT À UN FICHIER INFORMATIQUE DE RÉFÉRENCE**

(30) Priorité: 11.04.2016 FR 1653165
(71) Demandeur: Schneider Electric Industries SAS, 92500 Rueil-Malmaison (FR)
(72) Inventeur: MOULIN, Michel, 38050 GRENOBLE CEDEX 09 (FR); KOCOGLU, Osman, 38050 GRENOBLE CEDEX 09 (FR); DELETANG, Théo, 38050 GRENOBLE CEDEX 09 (FR)
(74) Mandataire: Lavoix

(57) **Abrégé**

Ce procédé de vérification automatique d'un fichier informatique cible comprend des étapes :
a) d'acquisition (100) d'un fichier informatique de référence et d'un fichier informatique à tester ;
b) d'acquisition (103) d'au moins un aléa numérique ;
c) de définition (104), en fonction de l'aléa numérique:
• d'une première zone à tester délimitant une portion du fichier de référence, et
• d'une deuxième zone à tester délimitant une portion du fichier cible ;

d) de calcul (106) d'une première empreinte numérique, par application d'une fonction de hachage sur la première zone à tester ;
e) de calcul (108) d'une deuxième empreinte numérique, par application de la même fonction de hachage sur la deuxième zone à tester ;
f) de comparaison automatique (110) des première et deuxième empreintes numériques.

## Description

L'invention concerne un procédé de vérification d'un fichier informatique cible par rapport à un fichier informatique de référence. L'invention concerne également un support d'enregistrement d'informations et un calculateur électronique pour la mise en oeuvre de ce procédé. L'invention concerne enfin un outil de test comportant un tel calculateur électronique.

On connaît des procédés pour vérifier automatiquement un fichier informatique cible par rapport à un fichier informatique de référence. Par exemple, lors de la fabrication d'appareils électroniques qui contiennent un logiciel embarqué dans une mémoire, il est connu de vérifier automatiquement le contenu de la mémoire afin de s'assurer que le logiciel embarqué est conforme à une version de référence de ce logiciel. En particulier, il est important de vérifier qu'un attaquant n'a pas, au cours du processus de fabrication, substitué de manière frauduleuse le logiciel embarqué installé par un logiciel falsifié. Une telle substitution, si elle n'est pas détectée, peut avoir de graves conséquences sur le fonctionnement de l'appareil. Toutefois, dans le cadre d'un processus de fabrication industrielle, il n'est pas toujours possible de consacrer une durée importante pour de telles opérations de vérification, en raison du grand nombre d'appareils à tester et de la cadence importante de la chaîne de fabrication et/ou de test. Le temps dédié pour mener des opérations de test sur chaque objet est donc réduit. Typiquement, il n'est pas souhaitable, dans le temps imparti, de lire l'intégralité du logiciel embarqué et de le comparer octet par octet à la version de référence ou d'en calculer sa signature. Pour économiser du temps, il est connu de calculer automatiquement une somme de contrôle du logiciel embarqué, au moyen d'une fonction de type CRC, pour « contrôle de redondance cyclique », et de comparer la somme de contrôle calculée sur le logiciel embarqué à une somme de contrôle calculée de la même manière sur la version de référence du logiciel. Si les deux sommes calculées présentent des valeurs différentes, cela indique que le logiciel embarqué a été modifié par rapport à la version de référence installée. Le calcul d'une telle somme de contrôle prend beaucoup moins de temps qu'une comparaison complète du logiciel embarqué, ce qui rend avantageux son utilisation dans le cadre d'un processus de fabrication industrielle de l'appareil.

Toutefois, une telle somme de contrôle n'offre pas une sécurité satisfaisante. En effet, avec les fonctions CRC typiquement utilisées, un attaquant peut prévoir à l'avance la valeur qui sera retournée par la fonction selon les données qui sont fournies en entrée à cette fonction. Il est donc possible de substituer le logiciel embarqué installé par un logiciel frauduleux spécialement modifié pour que la somme de contrôle calculée présente la valeur attendue. Une telle modification ne peut donc pas être détectée et l'appareil fabriqué peut quitter la chaîne de fabrication avec une version falsifiée du logiciel, ce qui n'est pas acceptable.

Le procédé décrit dans US 5 454 000-A est également connu et présente également des inconvénients.

C'est à ces inconvénients qu'entend plus particulièrement répondre l'invention, en proposant un procédé de vérification automatique d'un fichier informatique cible par rapport à un fichier informatique de référence qui présente une résistance accrue contre des attaques de sécurité tout en possédant une vitesse d'exécution qui soit rapide.

A cet effet, l'invention concerne un procédé de vérification automatique d'un fichier informatique cible par rapport à un fichier informatique de référence, ce procédé étant caractérisé en ce qu'il comprend des étapes :
a) d'acquisition d'un fichier informatique de référence et d'un fichier informatique à tester ;
b) d'acquisition d'au moins un aléa numérique ;
c) de définition, en fonction du au moins un aléa numérique acquis :
   - d'une première zone à tester délimitant une portion du fichier de référence, la première zone à tester présentant une longueur supérieure ou égale à 10% de la longueur totale du fichier de référence, et
   - d'une deuxième zone à tester délimitant une portion du fichier cible, la deuxième zone à tester présentant une même taille que la première zone à tester et étant située, à l'intérieur du fichier cible, à la même position relative par rapport à l'origine de ce fichier cible que la première zone de test par rapport à l'origine du fichier de référence ;
d) de calcul d'une première empreinte numérique, par application d'une fonction de hachage uniquement sur la portion du fichier de référence qui est contenue à l'intérieur de la première zone à tester ;
e) de calcul d'une deuxième empreinte numérique, par application de la même fonction de hachage uniquement sur la portion du fichier cible qui est contenue à l'intérieur de la deuxième zone à tester ;
f) de comparaison automatique des première et deuxième empreintes numériques, le fichier cible étant dit vérifié si les première et deuxième empreintes numériques sont égales et étant dit non-vérifié si les première et deuxième empreintes numériques sont différentes.

Grâce à l'invention, en sélectionnant aléatoirement la taille et la position des première et deuxième zones à tester, il n'est pas possible pour l'attaquant de savoir à l'avance quelle sera la portion du fichier cible qui fera l'objet de la vérification. Il lui est donc matériellement impossible de modifier à l'avance le fichier cible pour que la fonction de hachage retourne la valeur attendue de la deuxième empreinte numérique, comme il pourrait le faire avec les sommes de contrôle selon l'état de la technique. Une falsification du fichier cible ne peut donc pas être dissimulée par ce moyen. Elle a de fait plus de chances d'être détectée lors du procédé de vérification. Ainsi, ce procédé de vérification présente une efficacité et un niveau de sécurité accrus. De plus, comme il n'est pas nécessaire et de comparer l'intégralité du fichier cible avec le fichier de référence, ce procédé de vérification peut être mis en oeuvre en un temps réduit. Il est donc compatible avec les cadences usuelles des chaînes de production industrielle.

Selon des aspects avantageux mais non obligatoires de l'invention, un tel procédé de vérification automatique peut incorporer une ou plusieurs des caractéristiques suivantes, prises dans toute combinaison techniquement admissible :
- Le procédé comporte en outre :
   b') l'acquisition d'au moins un aléa numérique additionnel ;
   c') la définition, en fonction du au moins un aléa numérique additionnel acquis :
      - d'une troisième zone à tester, distincte de la première zone à tester et délimitant une portion additionnelle du fichier de référence, et
      - d'une quatrième zone à tester, distincte de la deuxième zone à tester et délimitant une portion additionnelle du fichier cible, la quatrième zone à tester présentant une même taille que la troisième zone à tester et étant située, à l'intérieur du fichier cible, à la même position relative par rapport à l'origine de ce fichier cible que la troisième zone de test par rapport à l'origine du fichier de référence ;
   d') le calcul d'une troisième empreinte numérique, par application d'une fonction de hachage uniquement sur la portion du fichier de référence qui est contenue à l'intérieur de la troisième zone à tester ;
   e') le calcul d'une quatrième empreinte numérique, par application de la même fonction de hachage uniquement sur la portion du fichier cible qui est contenue à l'intérieur de la quatrième zone à tester ;
   f') la comparaison automatique des troisième et quatrième empreintes numériques, le fichier cible étant alors dit vérifié uniquement si, en outre, les troisième et quatrième empreintes numériques sont égales.
- Les troisième et quatrième zones à tester occupent la totalité de la longueur, respectivement, du fichier de référence et du fichier cible.
- La troisième zone à tester est disjointe de la première zone à tester.
- La réunion de la troisième zone à tester et de la première zone à tester occupe la totalité de la longueur du fichier de référence.
- L'étape a) comprend en outre une vérification de l'authenticité du fichier de référence acquis, cette vérification de l'authenticité étant réalisée au moyen d'une signature numérique.
- Les étapes a), b), c), d) et f) sont exécutées automatiquement par un outil de test, en ce que le fichier cible, tel qu'un logiciel embarqué, est stocké dans une mémoire d'un appareil à tester, et en ce que le calcul de la deuxième empreinte numérique est réalisé automatiquement par l'appareil à tester, l'étape e) comprenant alors l'acquisition automatique de la deuxième empreinte numérique par l'outil de test.
- La fonction de hachage utilisée pour calculer les première et deuxième empreintes numériques est une fonction de hachage cryptographique, telle qu'une fonction de hachage de la famille SHA-2 ou SHA-3, de préférence la fonction de hachage SHA-256.

Selon un autre aspect, l'invention concerne un support d'enregistrement comportant des instructions pour la mise en oeuvre d'un procédé de vérification conforme à l'une quelconque des revendications précédentes lorsque ces instructions sont exécutées par un calculateur électronique.

Selon un autre aspect, l'invention concerne un calculateur électronique programmé pour :
a) acquérir un fichier informatique de référence et un fichier informatique à tester ;
b) acquérir au moins un aléa numérique ;
c) définir, en fonction du au moins un aléa numérique acquis :
   - une première zone à tester délimitant une portion du fichier de référence, et
   - une deuxième zone à tester délimitant une portion du fichier cible, la deuxième zone à tester présentant une même taille que la première zone à tester et étant située, à l'intérieur du fichier cible, à la même position relative par rapport à l'origine de ce fichier cible que la première zone de test par rapport à l'origine du fichier de référence ;
d) calculer une première empreinte numérique, par application d'une fonction de hachage uniquement sur la portion du fichier de référence qui est contenue à l'intérieur de la première zone à tester ;
e) calculer une deuxième empreinte numérique, par application de la même fonction de hachage uniquement sur la portion du fichier cible qui est contenue à l'intérieur de la deuxième zone à tester ;
f) comparer automatiquement les première et deuxième empreintes numériques, le fichier cible étant dit vérifié si les première et deuxième empreintes numériques sont égales et étant dit non-vérifié si les première et deuxième empreintes numériques sont différentes.

Selon un autre aspect, l'invention concerne un outil de test pour vérifier automatiquement, par rapport à un fichier informatique de référence, un fichier informatique cible, tel qu'un logiciel embarqué, stocké dans une mémoire d'un appareil à tester, cet outil de test comportant un calculateur électronique et une interface de communication pour échanger des données avec la mémoire de l'appareil à tester, cet outil de test étant caractérisé en ce que le calculateur électronique.

L'invention sera mieux comprise et d'autres avantages de celle-ci apparaîtront plus clairement à la lumière de la description qui va suivre, d'un mode de réalisation d'un procédé de vérification automatique donné uniquement à titre d'exemple et faite en référence aux dessins annexés dans lesquels :
- la figure 1 est une représentation schématique, d'une installation industrielle de test d'un appareil, comportant un outil de test pour la mise en oeuvre d'un procédé de vérification d'un fichier informatique cible conforme à l'invention ;
- la figure 2 est un ordinogramme d'un exemple d'un procédé de vérification d'un fichier informatique cible conforme à l'invention au moyen de l'outil de la figure 1 ;
- la figure 3 est un ordinogramme d'une étape d'authentification d'un fichier de référence mis en oeuvre au cours du procédé de vérification de la figure 2 ;
- la figure 4 est une représentation schématique d'une zone à tester d'un fichier informatique définie au cours du procédé de la figure 2.

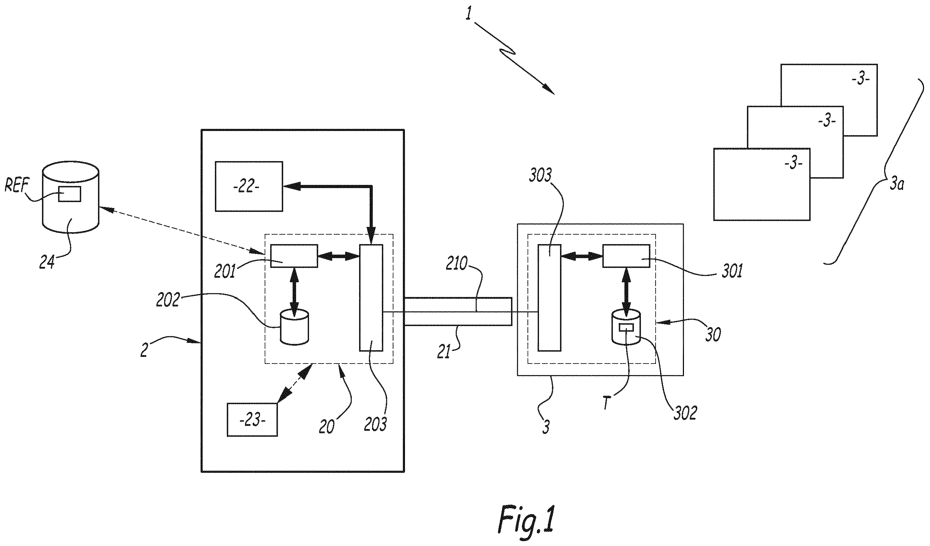

La figure 1 représente une installation de test 1 comportant un outil de test 2 et une série 3a d'appareils électroniques 3 à tester.

Chaque appareil 3 comporte un calculateur électronique 30 programmable, incluant ici une unité de calcul numérique 301, une mémoire 302 et une interface de communication 303, reliés entre eux par un bus de données, non illustré. Le calculateur 3 est notamment programmé pour assurer le fonctionnement de l'appareil 3. Dans cet exemple, l'appareil 3 est un disjoncteur commandable électroniquement.

L'unité de calcul 301 est un microprocesseur ou un microcontrôleur programmable. La mémoire 302 est ici une mémoire non volatile, par exemple un module mémoire de technologie Flash ou EEPROM. L'interface 303 autorise un échange de données entre le calculateur 30 et l'outil 2.

La mémoire 302 contient un logiciel embarqué T, qui joue ici le rôle de système d'exploitation pour faire fonctionner l'appareil 3. Dans la suite de cette description, ce logiciel embarqué T est désigné sous le nom de « fichier informatique cible ». Le fichier cible T est ici stocké à l'intérieur de la mémoire 302, par exemple après y avoir été enregistré lors d'une étape antérieure de fabrication de l'appareil 3.

A titre d'exemple illustratif, l'interface de communication 303 est ici de type filaire et comporte un connecteur. En variante, il peut s'agir d'une interface sans fil.

L'installation 1 a pour fonction de tester l'appareil 3, afin de vérifier que le fichier cible T stocké à l'intérieur de la mémoire 302 correspond bien à un « fichier informatique de référence », portant ici la référence REF. Ce fichier de référence REF est par exemple le logiciel qui a été installé à l'intérieur de la mémoire 302 lors de la fabrication de l'appareil 3. L'installation 1 a ainsi pour but de détecter si le logiciel installé dans la mémoire 302 a subi une modification non autorisée depuis son installation, le but étant d'empêcher que l'appareil 3 ne soit livré à un client avec une version falsifiée du logiciel embarqué à son bord.

A cet effet, l'outil de test 2 comporte ici un calculateur électronique 20 programmable, un connecteur 21, une interface utilisateur 22 et un générateur d'aléa numérique 23.

Le calculateur électronique 20 inclut une unité de calcul numérique 201, un support d'enregistrement d'informations 2020 et une interface de communication 203, reliés entre eux par un bus de données, non illustré. L'unité de calcul 201 est un microprocesseur ou un microcontrôleur programmable. Le support 2020 comporte ici une mémoire non volatile, telle qu'un module mémoire de technologie Flash ou EEPROM ou un disque dur.

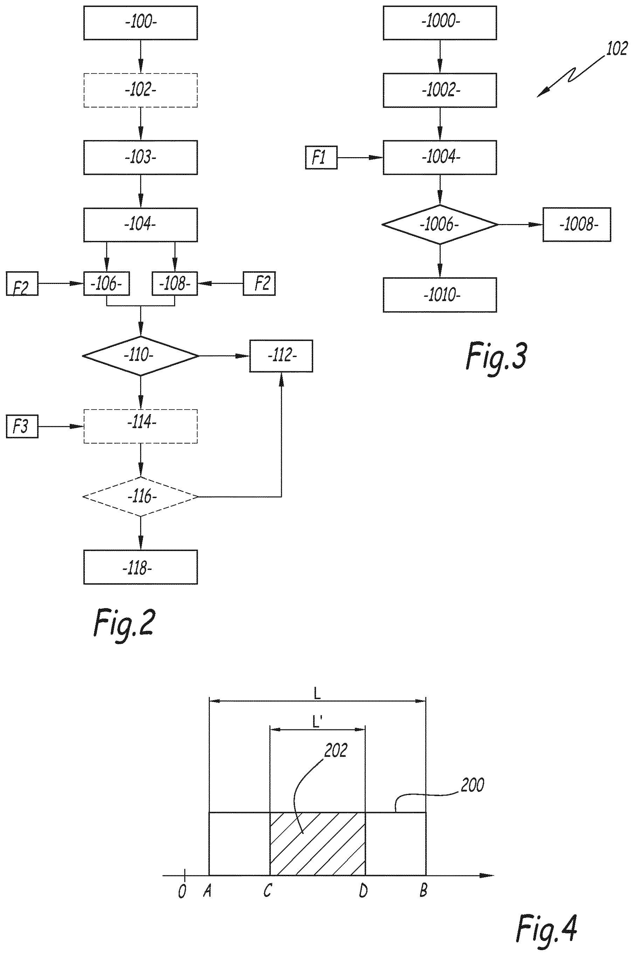

Le support 2020 contient des instructions pour l'exécution d'un procédé de vérification du fichier cible T conforme au procédé de la figure 2. L'unité 201 lit et exécute les instructions contenues dans le support 2020 pour mettre en oeuvre le procédé de la figure 2. L'interface 203 autorise un échange de données entre le calculateur 30 et l'outil 2, ici par l'intermédiaire du connecteur 21, compatible avec l'interface 303 pour former une liaison de données 210.

L'interface 203 autorise, en outre, un échange de données entre l'outil 2 et une base de données 24 qui contient le fichier de référence REF. Par exemple, la base de données 24 fait partie d'un serveur informatique distant de l'outil 2 auquel ce dernier accède par l'intermédiaire d'un réseau informatique local.

L'interface utilisateur 22 est ici une interface homme-machine et comporte un écran d'affichage, ainsi qu'un module de saisie de données.

Le générateur d'aléa 23 est apte à générer un aléa numérique sous la forme d'un nombre aléatoire ou d'un nombre pseudo-aléatoire. Ici, le générateur 23 est implémenté par le calculateur 20 de façon logicielle pour générer un nombre pseudo-aléatoire. En variante, le générateur d'aléa 23 est un appareil dédié pour produire des nombres aléatoires, connu sous le terme « hardware random number generator » en langue anglaise. Le générateur d'aléa 23 peut, en variante, être situé hors de l'outil 2, par exemple être implanté dans un serveur informatique distant.

Un exemple de fonctionnement de l'outil de test 2 est décrit ci-après, en référence à l'ordinogramme de la figure 2 et à l'aide des figures 1, 3 et 4.

Initialement, l'appareil 3 à tester est prélevé dans une série 3a d'appareils à tester puis est connecté à l'outil de test 2. En pratique, le connecteur 21 est raccordé avec l'interface 303 et la liaison de données 210 est établie entre l'appareil 3 et l'outil 2.

D'abord, lors d'une étape 100, le fichier de référence REF est automatiquement acquis, dans l'exemple depuis la base de données 24.

Avantageusement, le fichier REF est choisi dans la base de données 24 en fonction de propriétés de l'appareil 3. En effet, l'installation de test 1 peut être destinée à tester un grand nombre d'appareils pouvant être de nature différente et contenant chacun un logiciel embarqué différent. La base de données 24 contient ainsi plusieurs fichiers, jouant chacun le rôle de fichier de référence pour un modèle précis ou une version précise de l'appareil 3. Ici, chaque appareil 3 comporte, par exemple dans sa mémoire 302, un identifiant prédéfini, par exemple sous la forme d'une chaîne de caractères alphanumériques, qui identifie la version du logiciel correspondant au fichier cible T. L'identifiant est ici un numéro de version de ce logiciel.

A cet effet, l'étape 100 comporte une opération d'acquisition de l'identifiant de la version du fichier T. Par exemple, le calculateur 20 envoie, par la liaison de données 210, une requête au calculateur 30 pour que ce dernier retourne automatiquement l'identifiant qu'il contient. Lorsque cet identifiant est reçu, le calculateur 20 envoie une requête pour sélectionner automatiquement avec cet identifiant, le fichier REF correspondant dans la base de données 24, à l'aide d'une table de correspondance prédéfinie.

Dans cet exemple, l'étape 100 n'est mise en oeuvre qu'une seule fois pour toute la série 3a, par exemple lors de la vérification du premier appareil 3 issu de cette série 3a. Avantageusement, cette étape 100 n'est ensuite pas remise en oeuvre pour chacun des appareils 3 de la série 3a, tant que le fonctionnement de l'installation 1 n'est pas interrompu ou qu'un appareil d'une série d'appareils à tester autre que la série 3a est testé sur l'installation 1.

En variante, l'étape 100 peut être mise en oeuvre plusieurs fois pour une même série 3a. De préférence, lors d'une étape 102, l'authenticité du fichier REF acquis est vérifiée, comme illustré à la figure 3. Ici, cette vérification est réalisée au moyen d'une signature numérique.

Dans cet exemple, la signature numérique est obtenue préalablement par un procédé de signature numérique par cryptographie à clé publique, aussi dit à cryptographie asymétrique. Par exemple, une fonction de hachage F1 est appliquée sur le fichier de référence REF préalablement à son installation dans la base de données 24, pour fournir une empreinte numérique, pour « hash » en langue anglaise, de ce fichier de référence REF. Par exemple, la fonction de hachage F1 est une fonction cryptographique appartenant à la famille de fonctions cryptographiques SHA-2 ou SHA-3. Dans cet exemple, la fonction de hachage F1 est la fonction connue sous le nom de SHA-256, pour « Secure Hash Algorithm » en langue anglaise. De façon connue, l'empreinte numérique se présente sous la forme d'une valeur numérique qui est associée, idéalement de façon unique, au fichier de référence REF. En pratique, toutefois, il arrive qu'une même valeur numérique soit associée à deux fichiers distincts, mais la probabilité pour que cela se produise est faible.

L'empreinte numérique ainsi obtenue est ensuite encryptée au moyen d'une clé cryptographique privée pour générer la signature numérique, par exemple au moyen de l'algorithme de cryptage RSA avec une clé cryptographique privée d'une longueur de 4096 bits. La signature numérique générée, ainsi que la clé cryptographique publique associée à la clé cryptographique privée, sont toutes deux générées par un système d'infrastructure de gestion connue sous le nom « Public key infrastructure » en langue anglaise, ici installées sur le serveur distant.

Lors d'une opération 1000 de l'étape 102, une signature numérique et une clé publique sont automatiquement acquises par le calculateur 20, par exemple depuis le serveur distant.

Ensuite, lors d'une opération 1002, la signature numérique acquise est décryptée automatiquement par l'outil de test 2 au moyen de la clé cryptographique publique acquise lors de l'opération 1000 et en utilisant un algorithme de décryptage compatible, de manière à obtenir la valeur de l'empreinte numérique initialement générée. Cette empreinte numérique est dite décryptée.

Puis, lors d'une opération 1004, l'outil de test 2 applique la même fonction de hachage F1 sur le fichier de référence REF acquis lors de l'étape 100 pour obtenir une empreinte numérique calculée.

Par la suite, lors d'une opération 1006, l'empreinte numérique calculée est automatiquement comparée avec l'empreinte numérique décryptée. Si l'empreinte numérique calculée est différente de l'empreinte numérique décryptée, cela indique que le fichier informatique REF acquis lors de l'étape 100 a été modifié de façon non autorisée après sa signature numérique, ce qui pose un important problème de sécurité. Par conséquent, lors d'une opération 1008, l'outil de test 2 émet, via l'interface utilisateur 22, un signal indiquant l'échec de l'authentification du fichier de référence REF acquis. Ce dernier ne peut pas être utilisé pour vérifier le fichier cible T. Le procédé de vérification du fichier cible T est alors interrompu.

Si l'empreinte numérique calculée est égale à l'empreinte numérique décryptée, alors, lors d'une opération 1010, le fichier de référence REF acquis est dit être authentifié. L'étape 102 se termine et le procédé de vérification du fichier cible T se poursuit.

En variante, l'étape 102 est omise. Selon une autre variante, la fonction de hachage F1 est omise. La signature est alors directement générée à partir du fichier de référence REF et l'opération 1004 est omise.

Par la suite, lors d'une étape 103, illustrée à la figure 2, l'outil de test 2 acquiert automatiquement un aléa numérique, tel que deux nombres aléatoires ou pseudo-aléatoires. Par exemple, l'outil de test 2 commande le générateur 23 pour qu'il génère deux nombres pseudo-aléatoires. En variante, seul un nombre aléatoire est acquis.

Ensuite, lors d'une étape 104, le calculateur 20 définit, en fonction de l'aléa numérique acquis, une première zone à tester 202 délimitant une portion du fichier de référence acquis REF, et une deuxième zone à tester délimitant une portion du fichier cible T.

La figure 4 illustre un exemple de cette première zone à tester.

De façon connue, lorsqu'un fichier informatique est stocké à l'intérieur d'une mémoire ou d'un support d'enregistrement d'informations, les données formant ce fichier sont associées à des adresses mémoires qui expriment la position de ces données dans le fichier informatique.

Dans cet exemple, le fichier de référence REF s'étend continument dans un espace mémoire 200 entre des adresses mémoires A et B. Les adresses mémoires sont exprimées sous la forme d'une valeur numérique et sont définies par rapport à une adresse de référence O. La longueur totale L du fichier de référence REF est égale à la différence entre les adresses mémoires B et A. Par exemple, la longueur totale L est égale à un mégaoctet.

La première zone à tester occupe une portion du fichier de référence REF qui correspond ici à une zone 202 de l'espace 200. La zone 202 s'étend ici depuis une adresse mémoire C jusqu'à une adresse mémoire D et présente une taille, ou longueur L', qui est définie comme étant égale à la différence entre les adresses mémoire D et C. Cette longueur L' est strictement inférieure à la longueur totale L.

Avantageusement, la zone 202 présente une longueur supérieure ou égale à 10% de la longueur totale L, de préférence supérieure ou égale à 20% de cette longueur totale L, de préférence encore supérieure ou égale à 30% de cette longueur totale L. Par exemple, la longueur L' est égale à 256 kilo-octets, de préférence égale à 512 kilo-octets.

La longueur L' de la première zone à tester résulte d'un compromis entre les exigences de sécurité et les capacités de traitement du calculateur 30. En effet, plus la zone à tester présente une longueur l'importante et plus il est difficile à un attaquant de dissimuler une modification non autorisée du fichier cible T, avec cependant l'inconvénient que les opérations ultérieures de calcul relatives à cette zone à tester nécessitent des ressources informatiques importantes.

Dans cet exemple, le fichier cible T présente la même longueur que le fichier de référence REF. Si le fichier cible T présente une longueur différente du fichier de référence REF, cela indique généralement que le fichier cible T a été modifié.

La première zone à tester 202 est ainsi caractérisée d'une part par sa taille, ou longueur L', et d'autre part par la position relative qu'elle occupe par rapport au fichier de référence, cette position étant quantifiée par la différence entre les adresses mémoires C et A.

La deuxième zone à tester présente une longueur qui est la même que la longueur de la première zone à tester, à savoir égale à la longueur L', et se situe, à l'intérieur du fichier cible T, à la même position relative par rapport à l'origine de ce fichier cible T que la première zone de test se trouve au sein du fichier de référence REF par rapport à l'origine du fichier de référence REF. Cette position relative est donnée par la différence entre les adresses mémoire C et A. On note « C-A » cette position relative.

Ainsi, les propriétés de la deuxième zone à tester sont normalement les mêmes que celles de la première zone à tester. De fait, la deuxième zone de référence est définie directement à partir des valeurs de la longueur L' et de la position relative C-A, de la première zone de référence.

Dans cet exemple, le calculateur 20 génère automatiquement la valeur de l'adresse C correspondant à l'origine de la zone à tester ainsi que la longueur L' de cette zone à tester, en fonction de l'aléa statistique acquis lors de l'étape 103. Par exemple, l'un des deux nombres aléatoires acquis est utilisé pour calculer la valeur de l'adresse C et le deuxième nombre aléatoire acquis est utilisé pour calculer la longueur L'.

Par exemple, si le deuxième nombre aléatoire conduit à la détermination d'une valeur de longueur L' qui n'est pas acceptable, par exemple parce que trop grande ou trop petite, c'est-à-dire supérieure à la longueur L ou inférieure à 5% de la longueur L, alors ce nombre aléatoire n'est pas accepté et un nouveau nombre aléatoire est acquis. Cette opération peut être répétée jusqu'à l'obtention d'une valeur de longueur L' satisfaisante. Il en va de même pour le premier nombre aléatoire, par exemple dans le cas où il conduit à la détermination d'une adresse mémoire C en dehors du fichier de référence, c'est-à-dire qui n'appartient pas à la zone 202.

En variante, lorsque seul un nombre aléatoire est acquis, la zone à tester peut être calculée en fixant la longueur L' égale à une valeur prédéfinie et en choisissant aléatoirement la valeur de la position relative C-A à partir de l'aléa numérique généré.

Alternativement, c'est la longueur L' qui est choisie aléatoirement à partir de l'aléa numérique généré et la position relative C-A qui est fixée à une valeur prédéfinie.

Ensuite, lors d'une étape 106, comme illustré à la figure 2, le calculateur 20 calcule automatiquement une première empreinte numérique, par application d'une fonction de hachage F2, uniquement sur la portion du fichier de référence REF qui est contenue à l'intérieur de la première zone à tester, c'est-à-dire entre les adresses mémoires C et D. Par exemple, la première empreinte numérique se présente sous la forme d'une valeur numérique avec une taille d'au moins 256 bits.

Lors d'une étape 108, par exemple simultanée avec l'étape 106, le calculateur 30 de l'appareil 3 calcule automatiquement une deuxième empreinte numérique, par application de la même fonction de hachage F2 uniquement sur la portion du fichier cible T qui est contenue à l'intérieur de la deuxième zone à tester.

Par exemple, le calculateur 20 envoie automatiquement une requête à cet effet au calculateur 30, par l'intermédiaire de la liaison 210. Cette requête contient notamment les caractéristiques de la deuxième zone à tester telles que définies lors de l'étape 104, notamment les valeurs de la position relative « C-A » de la zone à tester ainsi que de sa longueur L' au sein du fichier cible T. Ainsi, il n'est pas nécessaire de transférer l'intégralité du fichier cible T vers le calculateur 20, ce qui prendrait trop de temps. Par exemple, le calcul de la deuxième empreinte numérique est réalisé par une application exécutable dediée enregistrée dans la mémoire 302 du calculateur 30. Ce calcul est ainsi réalisé sur l'appareil 3 à tester.

Ici, la fonction de hachage F2 est une fonction cryptographique appartenant à la famille de fonctions cryptographiques SHA-2 ou SHA-3. Dans cet exemple, la fonction de hachage F2 est la fonction connue sous le nom de SHA-256.

La fonction de hachage F2 n'est pas nécessairement la même que la fonction de hachage F1 utilisée lors de l'étape 102. Toutefois, en pratique, les fonctions de hachage F1 et F2 sont les mêmes, pour limiter la complexité du calculateur 20.

En variante, lorsque le calculateur 30 présente des performances réduites, on utilise de préférence une fonction de hachage F2 qui demande moins de ressources calculatoires, telles qu'une fonction de hachage de type CRC-16, pour « cyclic redundancy check » ou une somme de contrôle. Cela évite que le calcul de la deuxième empreinte numérique ne prenne trop de temps et ne perturbe le déroulement des autres opérations de test sur l'installation de test 1.

Le calculateur 30 effectue donc ce calcul de la deuxième empreinte numérique sur le fichier à tester T, en fonction des caractéristiques de la deuxième zone à tester qui lui ont été transmises par le calculateur 20.

Une fois ce calcul de la deuxième empreinte numérique effectué par le calculateur 30, ce dernier renvoie automatiquement, à destination du calculateur 20, la valeur de la deuxième empreinte numérique calculée par le calculateur 30.

Ensuite, lors d'une étape 110, le calculateur 20 compare automatiquement les valeurs des premières et deuxièmes empreintes numériques calculées.

Si les premières et deuxièmes empreintes numériques sont différentes, cela indique que le fichier cible T est différent du fichier informatique de référence. La vérification est alors dite avoir échoué. Le fichier cible T est dit être non vérifié. Alors, lors d'une étape 112, le calculateur 20 envoie automatiquement un signal indiquant un échec, par exemple en direction de l'interface utilisateur 22. Avantageusement, un numéro de série de l'appareil 3 testé est automatiquement enregistré par l'outil de test 2.

L'appareil 3 est alors déconnecté de l'outil de test 2, par exemple en interrompant la liaison de données 210 et en déconnectant le connecteur 21 de l'interface 303. Un autre appareil 3 de la série 3a est alors prélevé pour être à son tour testé par l'outil de test 2.

Dans cet exemple, si les première et deuxième empreintes numériques sont détectées comme étant égales, alors une étape de vérification additionnelle est mise en oeuvre lors d'une étape subséquente 114.

Lors de cette étape 114, des troisième et quatrième empreintes numériques sont calculées, respectivement, pour des troisièmes et quatrièmes zones à tester, respectivement, du fichier de référence REF et du fichier cible T. Ces troisième et quatrième zones à tester sont respectivement distinctes des première et deuxième zones à tester.

Dans cet exemple, la troisième zone à tester s'étend sur la totalité du fichier de référence REF, c'est-à-dire entre les adresses mémoires A et B. De façon analogue, la quatrième zone à tester s'étend sur la totalité du fichier cible T.

En variante, les troisième et quatrième zones à tester peuvent s'étendre uniquement sur une portion du fichier de référence REF et du fichier cible T. Par exemple, la troisième zone à tester est disjointe de la première zone à tester. En variante, la réunion de la troisième zone à tester et de la première zone à tester occupe la totalité de la longueur du fichier de référence. A cet effet, l'étape 114 comporte des étapes supplémentaires d'acquisition d'un aléa numérique et de définition des troisième et quatrième zones à tester, ces étapes étant analogues à celles mises en oeuvre lors des étapes 103 et 104 respectivement, pour les première et deuxième zones à tester. Par exemple, le calculateur 30 calcule automatiquement une troisième empreinte numérique, par application d'une fonction de hachage F3 sur la totalité du fichier de référence REF. Cette fonction de hachage F3 est ici identique à la fonction de hachage F2, bien cela ne soit pas obligatoirement le cas. Ce calcul est par exemple effectué de manière analogue à celui effectué pour la première empreinte numérique lors de l'étape 106 précédemment décrite.

Lors d'une étape 116 de comparaison additionnelle, les valeurs des troisième et quatrième empreintes numériques sont automatiquement comparées par le calculateur 20. Si ces troisième et quatrième empreintes numériques sont différentes l'une de l'autre, cela indique que le fichier cible T est différent du fichier informatique de référence REF, et ce malgré le fait que la comparaison 110 n'ait pas mis en évidence de différences entre les premières et deuxièmes empreintes numériques. L'étape 112 précédemment décrite est alors exécutée.

Dans le cas contraire, si les troisièmes et quatrièmes empreintes numériques sont déterminées comme étant égales l'une avec l'autre, alors le fichier cible T est considéré comme correspondant au fichier de référence et est alors dit vérifié. Ainsi, le fichier cible T n'est ici dit vérifié que si les première et deuxième empreintes numériques sont égales entre elles et si les troisième et quatrième empreintes numériques sont aussi égales entre elles.

Alors, lors d'une étape 118, le calculateur 20 génère un signal indiquant que la vérification de ce fichier cible T s'est terminée avec succès. Par exemple, un message est automatiquement envoyé vers l'interface 22.

En sélectionnant aléatoirement la taille et la position des première et deuxième zones à tester, il n'est pas possible pour un attaquant désireux de modifier frauduleusement le fichier cible T de savoir à l'avance quelle sera la portion du fichier cible T qui fera l'objet de la vérification. Il est en effet matériellement impossible de modifier le fichier cible T pour que la fonction de hachage F2 retourne la valeur attendue de la deuxième empreinte numérique pour toutes les configurations possibles de la première zone à tester, tellement celles-ci sont nombreuses. Ainsi, il n'est pas possible de dissimuler par ce moyen une modification du fichier cible T. En rajoutant des vérifications additionnelles sur les troisième et quatrième zones à tester, on augmente encore la probabilité de détecter une telle modification dans le rare cas où elle n'aurait pas pu être détectée à partir des première et deuxième zones à tester. Le procédé de vérification reste malgré tout suffisamment rapide pour être implémenté dans un contexte industriel sans nuire au bon déroulement et à l'efficacité des processus industriels de fabrication et/ou de test.

De nombreux autres modes de réalisation sont possibles.

Par exemple, l'étape 114 de vérification additionnelle et l'étape 116 de comparaison additionnelle sont omises. Dans ce cas, à l'issue de la comparaison 110, si les premières et deuxièmes empreintes numériques sont égales l'une à l'autre, alors l'étape 118 est directement mise en oeuvre.

Les étapes 114 et 116 peuvent être répétées plusieurs fois, pour définir des zones à tester additionnelles sur le fichier de référence REF et le fichier cible T, distinctes des première, deuxième, troisième et quatrième zones à tester.

Le procédé de vérification de la figure 2 peut être utilisé indépendamment de l'installation de test 1, pour vérifier un fichier cible qui est autre chose qu'un logiciel embarqué. Par exemple, le fichier cible T est une image numérique ou un contenu multimédia.

Les variantes et modes de réalisation décrits ci-dessus peuvent être combinés entre eux pour former des nouveaux modes de réalisation de l'invention.

## Revendications

1. Procédé de vérification automatique d'un fichier informatique cible (T) par rapport à un fichier informatique de référence (REF), ce procédé étant **caractérisé en ce qu'**il comprend des étapes :
a) d'acquisition (100) d'un fichier informatique de référence (REF) et d'un fichier informatique à tester (T) ;
b) d'acquisition (103) d'au moins un aléa numérique ;
c) de définition (104), en fonction du au moins un aléa numérique acquis :
• d'une première zone à tester délimitant une portion du fichier de référence, la première zone à tester présentant une longueur (L') supérieure ou égale à 10% de la longueur totale (L) du fichier de référence, et
• d'une deuxième zone à tester délimitant une portion du fichier cible, la deuxième zone à tester présentant une même taille (L') que la première zone à tester et étant située, à l'intérieur du fichier cible, à la même position relative (C-A) par rapport à l'origine de ce fichier cible que la première zone de test par rapport à l'origine (A) du fichier de référence ;
d) de calcul (106) d'une première empreinte numérique, par application d'une fonction de hachage (F2) uniquement sur la portion du fichier de référence (REF) qui est contenue à l'intérieur de la première zone à tester ;
e) de calcul (108) d'une deuxième empreinte numérique, par application de la même fonction de hachage uniquement sur la portion du fichier cible (T) qui est contenue à l'intérieur de la deuxième zone à tester ;
f) de comparaison automatique (110) des première et deuxième empreintes numériques, le fichier cible étant dit vérifié (118) si les première et deuxième empreintes numériques sont égales et étant dit non-vérifié (112) si les première et deuxième empreintes numériques sont différentes.

2. Procédé de vérification selon la revendication 1, **caractérisé en ce qu'**il comporte en outre :
b') l'acquisition (114) d'au moins un aléa numérique ;
c') la définition (114), en fonction du au moins un aléa numérique additionnel acquis :
• d'une troisième zone à tester, distincte de la première zone à tester et délimitant une portion additionnelle du fichier de référence (REF), et
• d'une quatrième zone à tester, distincte de la deuxième zone à tester et délimitant une portion additionnelle du fichier cible (T), la quatrième zone à tester présentant une même taille que la troisième zone à tester et étant située, à l'intérieur du fichier cible, à la même position relative par rapport à l'origine de ce fichier cible que la troisième zone de test par rapport à l'origine du fichier de référence ;
d') le calcul (114) d'une troisième empreinte numérique, par application d'une fonction de hachage uniquement sur la portion du fichier de référence qui est contenue à l'intérieur de la troisième zone à tester ;
e') le calcul (114) d'une quatrième empreinte numérique, par application de la même fonction de hachage uniquement sur la portion du fichier cible qui est contenue à l'intérieur de la quatrième zone à tester ;
f') la comparaison automatique (116) des troisième et quatrième empreintes numériques, le fichier cible étant alors dit vérifié uniquement si, en outre, les troisième et quatrième empreintes numériques sont égales.

3. Procédé de vérification selon la revendication 2, **caractérisé en ce que** les troisième et quatrième zones à tester occupent la totalité de la longueur (L), respectivement, du fichier de référence (REF) et du fichier cible (T).

4. Procédé de vérification selon la revendication 2, **caractérisé en ce que** la troisième zone à tester est disjointe de la première zone à tester.

5. Procédé de vérification selon la revendication 2 ou 4, **caractérisé en ce que** la réunion de la troisième zone à tester et de la première zone à tester occupe la totalité de la longueur du fichier de référence (REF).

6. Procédé de vérification selon l'une quelconque des revendications précédentes, **caractérisé en ce que** l'étape a) comprend en outre une vérification de l'authenticité (102) du fichier de référence (REF) acquis, cette vérification de l'authenticité étant réalisée au moyen d'une signature numérique.

7. Procédé de vérification selon l'une quelconque des revendications précédentes, **caractérisé en ce que** les étapes a), b), c), d) et f) sont exécutées automatiquement par un outil de test (2), **en ce que** le fichier cible (T), tel qu'un logiciel embarqué, est stocké dans une mémoire (302) d'un appareil à tester (3), et **en ce que** le calcul (108) de la deuxième empreinte numérique est réalisé automatiquement par l'appareil à tester (3), l'étape e) comprenant alors l'acquisition automatique de la deuxième empreinte numérique par l'outil de test (2).

8. Procédé de vérification selon l'une quelconque des revendications précédentes, **caractérisé en ce que** la fonction de hachage utilisée pour calculer (106, 108) les première et deuxième empreintes numériques est une fonction de hachage cryptographique, telle qu'une fonction de hachage de la famille SHA-2 ou SHA-3, de préférence la fonction de hachage SHA-256.

9. Support d'enregistrement d'informations, **caractérisé en ce qu'**il comporte des instructions pour la mise en oeuvre d'un procédé de vérification conforme à l'une quelconque des revendications précédentes lorsque ces instructions sont exécutées par un calculateur électronique (20).

10. Calculateur électronique (20) pour la mise en oeuvre d'un procédé de vérification selon l'une quelconque des revendications 1 à 8, **caractérisé en ce que** ce calculateur électronique (20) est programmé pour :
a) acquérir (100) un fichier informatique de référence (REF) et un fichier informatique à tester ;
b) acquérir (103) au moins un aléa numérique ;
c) définir (104), en fonction du au moins un aléa numérique acquis :
• une première zone à tester délimitant une portion du fichier de référence (REF) la première zone à tester présentant une longueur (L') supérieure ou égale à 10% de la longueur totale (L) du fichier de référence, et
• une deuxième zone à tester délimitant une portion du fichier cible (T), la deuxième zone à tester présentant une même taille (L') que la première zone à tester et étant située, à l'intérieur du fichier cible (T), à la même position (C-A) relative par rapport à l'origine de ce fichier cible que la première zone de test par rapport à l'origine (A) du fichier de référence ;
d) calculer (106) une première empreinte numérique, par application d'une fonction de hachage uniquement sur la portion du fichier de référence (REF) qui est contenue à l'intérieur de la première zone à tester ;
e) calculer (108) une deuxième empreinte numérique, par application de la même fonction de hachage uniquement sur la portion du fichier cible (T) qui est contenue à l'intérieur de la deuxième zone à tester ;
f) comparer automatiquement (110) les première et deuxième empreintes numériques, le fichier cible (T) étant dit vérifié si les première et deuxième empreintes numériques sont égales et étant dit non-vérifié si les première et deuxième empreintes numériques sont différentes.

11. Outil de test (2) pour vérifier automatiquement, par rapport à un fichier informatique de référence (REF), un fichier informatique cible (T), tel qu'un logiciel embarqué, stocké dans une mémoire (302) d'un appareil à tester (3), cet outil de test (2) comportant un calculateur électronique (20) et une interface de communication (21) pour échanger des données avec la mémoire (302) de l'appareil à tester (3), cet outil de test (2) étant **caractérisé en ce que** le calculateur électronique (20) est conforme à la revendication 10.

## Revendications modifiées

### Revendications modifiées conformément à la règle 137(2) CBE.

1. Procédé de vérification automatique d'un fichier informatique cible (T) par rapport à un fichier informatique de référence (REF), ce procédé comprenant des étapes :
a) d'acquisition (100) d'un fichier informatique de référence (REF) et d'un fichier informatique à tester (T) ;
b) d'acquisition (103) d'au moins un aléa numérique ;
c) de définition (104), en fonction du au moins un aléa numérique acquis :
• d'une première zone à tester délimitant une portion du fichier de référence, la première zone à tester présentant une longueur (L') supérieure ou égale à 10% de la longueur totale (L) du fichier de référence, et
• d'une deuxième zone à tester délimitant une portion du fichier cible, la deuxième zone à tester présentant une même taille (L') que la première zone à tester et étant située, à l'intérieur du fichier cible, à la même position relative (C-A) par rapport à l'origine de ce fichier cible que la première zone de test par rapport à l'origine (A) du fichier de référence ;
d) de calcul (106) d'une première empreinte numérique, par application d'une fonction de hachage (F2) uniquement sur la portion du fichier de référence (REF) qui est contenue à l'intérieur de la première zone à tester ;
e) de calcul (108) d'une deuxième empreinte numérique, par application de la même fonction de hachage uniquement sur la portion du fichier cible (T) qui est contenue à l'intérieur de la deuxième zone à tester ;
f) de comparaison automatique (110) des première et deuxième empreintes numériques, le fichier cible étant dit vérifié (118) si les première et deuxième empreintes numériques sont égales et étant dit non-vérifié (112) si les première et deuxième empreintes numériques sont différentes ;
**caractérisé en ce qu'**il comporte en outre :
b') l'acquisition (114) d'au moins un aléa numérique ;
c') la définition (114), en fonction du au moins un aléa numérique additionnel acquis :
• d'une troisième zone à tester, distincte de la première zone à tester et délimitant une portion additionnelle du fichier de référence (REF), la troisième zone à tester occupant la totalité de la longueur (L) du fichier de référence (REF), et
• d'une quatrième zone à tester, distincte de la deuxième zone à tester et délimitant une portion additionnelle du fichier cible (T), la quatrième zone à tester présentant une même taille que la troisième zone à tester et étant située, à l'intérieur du fichier cible, à la même position relative par rapport à l'origine de ce fichier cible que la troisième zone de test par rapport à l'origine du fichier de référence, la quatrième zone à tester occupant la totalité de la longueur (L) du fichier cible (T) ;
d') le calcul (114) d'une troisième empreinte numérique, par application d'une fonction de hachage uniquement sur la portion du fichier de référence qui est contenue à l'intérieur de la troisième zone à tester ;
e') le calcul (114) d'une quatrième empreinte numérique, par application de la même fonction de hachage uniquement sur la portion du fichier cible qui est contenue à l'intérieur de la quatrième zone à tester ;
f') la comparaison automatique (116) des troisième et quatrième empreintes numériques, le fichier cible étant alors dit vérifié uniquement si, en outre, les troisième et quatrième empreintes numériques sont égales.

2. Procédé de vérification selon la revendication 1, **caractérisé en ce que** l'étape a) comprend en outre une vérification de l'authenticité (102) du fichier de référence (REF) acquis, cette vérification de l'authenticité étant réalisée au moyen d'une signature numérique.

3. Procédé de vérification selon l'une quelconque des revendications précédentes, **caractérisé en ce que** les étapes a), b), c), d) et f) sont exécutées automatiquement par un outil de test (2), **en ce que** le fichier cible (T), tel qu'un logiciel embarqué, est stocké dans une mémoire (302) d'un appareil à tester (3), et **en ce que** le calcul (108) de la deuxième empreinte numérique est réalisé automatiquement par l'appareil à tester (3), l'étape e) comprenant alors l'acquisition automatique de la deuxième empreinte numérique par l'outil de test (2).

4. Procédé de vérification selon l'une quelconque des revendications précédentes, **caractérisé en ce que** la fonction de hachage utilisée pour calculer (106, 108) les première et deuxième empreintes numériques est une fonction de hachage cryptographique, telle qu'une fonction de hachage de la famille SHA-2 ou SHA-3, de préférence la fonction de hachage SHA-256.

5. Support d'enregistrement d'informations, **caractérisé en ce qu'**il comporte des instructions pour la mise en oeuvre d'un procédé de vérification conforme à l'une quelconque des revendications précédentes lorsque ces instructions sont exécutées par un calculateur électronique (20).

6. Calculateur électronique (20) pour la mise en oeuvre d'un procédé de vérification selon l'une quelconque des revendications 1 à 4, ce calculateur électronique (20) étant programmé pour :
a) acquérir (100) un fichier informatique de référence (REF) et un fichier informatique à tester ;
b) acquérir (103) au moins un aléa numérique ;
c) définir (104), en fonction du au moins un aléa numérique acquis :
• une première zone à tester délimitant une portion du fichier de référence (REF) la première zone à tester présentant une longueur (L') supérieure ou égale à 10% de la longueur totale (L) du fichier de référence, et
• une deuxième zone à tester délimitant une portion du fichier cible (T), la deuxième zone à tester présentant une même taille (L') que la première zone à tester et étant située, à l'intérieur du fichier cible (T), à la même position (C-A) relative par rapport à l'origine de ce fichier cible que la première zone de test par rapport à l'origine (A) du fichier de référence ;
d) calculer (106) une première empreinte numérique, par application d'une fonction de hachage uniquement sur la portion du fichier de référence (REF) qui est contenue à l'intérieur de la première zone à tester ;
e) calculer (108) une deuxième empreinte numérique, par application de la même fonction de hachage uniquement sur la portion du fichier cible (T) qui est contenue à l'intérieur de la deuxième zone à tester ;
f) comparer automatiquement (110) les première et deuxième empreintes numériques, le fichier cible (T) étant dit vérifié si les première et deuxième empreintes numériques sont égales et étant dit non-vérifié si les première et deuxième empreintes numériques sont différentes ;
**caractérisé en ce que** le calculateur électronique (20) est en outre programmé pour :
b') acquérir (114) au moins un aléa numérique ;
c') définir (114), en fonction du au moins un aléa numérique additionnel acquis :
• une troisième zone à tester, distincte de la première zone à tester et délimitant une portion additionnelle du fichier de référence (REF), la troisième zone à tester occupant la totalité de la longueur (L) du fichier de référence (REF), et
• une quatrième zone à tester, distincte de la deuxième zone à tester et délimitant une portion additionnelle du fichier cible (T), la quatrième zone à tester présentant une même taille que la troisième zone à tester et étant située, à l'intérieur du fichier cible, à la même position relative par rapport à l'origine de ce fichier cible que la troisième zone de test par rapport à l'origine du fichier de référence, la quatrième zone à tester occupant la totalité de la longueur (L) du fichier cible (T) ;
d') calculer (114) une troisième empreinte numérique, par application d'une fonction de hachage uniquement sur la portion du fichier de référence qui est contenue à l'intérieur de la troisième zone à tester ;
e') calculer (114) une quatrième empreinte numérique, par application de la même fonction de hachage uniquement sur la portion du fichier cible qui est contenue à l'intérieur de la quatrième zone à tester ;
f') comparer automatiquement (116) des troisième et quatrième empreintes numériques, le fichier cible étant alors dit vérifié uniquement si, en outre, les troisième et quatrième empreintes numériques sont égales.

7. Outil de test (2) pour vérifier automatiquement, par rapport à un fichier informatique de référence (REF), un fichier informatique cible (T), tel qu'un logiciel embarqué, stocké dans une mémoire (302) d'un appareil à tester (3), cet outil de test (2) comportant un calculateur électronique (20) et une interface de communication (21) pour échanger des données avec la mémoire (302) de l'appareil à tester (3), cet outil de test (2) étant **caractérisé en ce que** le calculateur électronique (20) est conforme à la revendication 6.
